# EUROPÄISCHE PATENTANMELDUNG

(11) **EP 2 927 459 A1**
(43) Veröffentlichungstag der Anmeldung: **07.10.2015**
(21) Anmeldenummer: 14162724.0
(22) Anmeldetag: 31.03.2014
(51) Int. Cl.: F02C 7/10, F01D 25/24

(54) **Gasturbine**

(71) Anmelder: Siemens Aktiengesellschaft, 80333 München (DE)
(72) Erfinder: Wilke, Martin, 45276 Essen (DE)

(57) **Zusammenfassung**

Die Erfindung gibt eine Gasturbine (1) an, welche einen Verdichter (2), ein Mittelgehäuse (12), wenigstens eine Brennkammer (22), eine Expansionsturbine (20), und einen Wärmetauscher umfasst, wobei die oder jede Brennkammer (22) mit der Expansionsturbine (20) strömungstechnisch über ein Innengehäuse (16) verbunden ist, welches durch den Innenraum (10) des Mittelgehäuses (12) geführt ist, wobei der Verdichter (2) gegen den Innenraum (10) des Mittelgehäuses (12) strömungstechnisch durch eine ringförmige Sammelkammer (14) abgegrenzt wird, welche mit einem Auslass (8) des Verdichters (2) verbunden ist, und welche eine Anzahl von Ableitungen (40) aufweist, die im Betrieb mit der Kaltseite (64) des Wärmetauschers (62) verbunden sind.

## Beschreibung

Die Erfindung betrifft eine Gasturbine, umfassend einen Verdichter, ein Mittelgehäuse, wenigstens eine Brennkammer, und eine Expansionsturbine, wobei die oder jede Brennkammer mit der Expansionsturbine strömungstechnisch über ein Innengehäuse verbunden ist, welches durch den Innenraum des Mittelgehäuses geführt ist.

In einer Gasturbine wird die Verbrennungswärme eines Brennstoffes in mechanische Arbeit umgewandelt. Der thermodynamische Kreisprozess, welcher diese Umwandlung beschreibt, entspricht näherungsweise dem Joule-Kreisprozess.

Dabei wird zunächst ein sauerstoffhaltiges Arbeitsgas, in der Praxis meist Luft, von einer Verdichterkammer verdichtet, wobei es sich von einer Ausgangstemperatur *T₁* auf *T₂* erwärmt, und der Druck steigt. Im zweiten Schritt wird dem Arbeitsgas in einer Brennkammer bei konstantem Druck durch Verbrennen des zugemischten Brennstoffes Wärme zugeführt, wodurch die Temperatur weiter auf *T₃* ansteigt. Das verdichtete, erhitzte Arbeitsgas verrichtet dann mechanische Arbeit, indem es expandiert und dabei über Schaufeln die Turbine antreibt. Hierbei sinkt die Temperatur auf *T₄.* Auch der Druck sinkt. Ein Teil der mechanischen Arbeit, welche an der Turbine gewonnen wird, kann zur Verdichtung im ersten Schritt herangezogen werden. In einem letzten Schritt wird dem Arbeitsgas bei konstantem Druck durch Kühlung Abwärme entzogen, wodurch die Temperatur wieder auf *T₁* absinkt. Für die Näherung eines idealen Gases ergibt sich hierbei der Wirkungsgrad des Prozesses zu *η*=1*-*(*T*₄*-T*₁)/(*T*₃*-T*₂).

Aufgrund der starken Zunahme regenerativer Energieerzeugung in immer mehr Industrieländern kommt Wärmekraftwerken, welche Gasturbinen einsetzen, eine immer höhere Bedeutung zu. Die fehlende Planungssicherheit, welche eine Energieerzeugung durch Solarenergie oder Windkraft aus naturgegebenen Gründen mit sich bringt, muss durch ausreichende Reservekapazitäten in der Erzeugung ausgeglichen werden, welche zudem möglichst schnell die angeforderte Leistung bereitzustellen imstande sind. Hier sind Kraftwerke, welche mit Gasturbinen betrieben werden, infolge der Flüchtigkeit des verwendeten Brennstoffes gegenüber den thermodynamisch trägeren Kohlekraftwerken oder gar Kernreaktoren deutlich im Vorteil.

Der Wirkungsgrad einer Gasturbine als Quotient der erzeugten Energie über den totalen Energieinhalt des eingesetzten Brennstoffes beträgt selbst bei einer modernen Anlage deutlich unter 50%, da die durch Verbrennung zugeführte Wärme als Abwärme wieder abgeführt wird, und somit der Energieinhalt der Abwärme nach der Expansion des Arbeitsgas nicht mehr genutzt wird.

Der Wirkungsgrad kann jedoch durch Nutzung dieser Abwärme erhöht werden, indem beispielsweise in einem zweiten Kreislauf durch die Abwärme eine Dampfturbine eines zweiten Wärmekraftwerkes betrieben wird (sogenannte "combined cycle"- oder "Gas-und-Dampf"-Technologie). Hierdurch kann der Wirkungsgrad um den Grad der Abwärme, welche der Dampfturbine zugeführt werden kann, verbessert werden. Für diese Verbesserung des Wirkungsgrades steigt jedoch der Systemaufwand an, da nun der gesamte Dampfkreislauf an die Gasturbine anzubinden und regelungstechnisch auf diese abzustimmen ist, wodurch sich die Investitionskosten einer Anlage erhöhen. Überdies können vie-le bereits existierende Wärmekraftwerke mit Gasturbinen aufgrund der Dimensionen der Komponenten eines Dampfkreislaufes nicht ohne Weiteres mit einem solchen nachgerüstet werden.

Eine mögliche weiterführende Lösung kann hierbei sein, die Abwärme des Abgases der Gasturbine durch die Einbindung in einen Rekuperatorprozess dazu zu nutzen, das im ersten Schritt vorverdichtete Arbeitsgas weiter zu erwärmen, bevor die Verbrennungswärme des Brennstoffes zugeführt wird. Da in vielen Gasturbinen die Temperatur *T₂* des vorverdichteten Arbeitsgases unter der Abwärmetemperatur *T₄* liegt, muss im idealen Modell die dieser Differenz *T*₄-*T*₂ entsprechende Wärmemenge dem Arbeitsgas nicht durch den Energieinhalt des Brennstoffes zugeführt werden, sondern kann eingespart werden, was zu einer entsprechenden Erhöhung des Wirkungsgrades führt.

Ein ungelöstes Problem stellt hierbei die technische Umsetzung der Einbindung insbesondere eines bestehenden Gasturbinen-Systems in einen Rekuperatorprozess dar, wobei der Entnahme des vorverdichteten Arbeitsgases und dessen Weiterleitung zum Wärmetauscher hierbei aufgrund der räumlichen Beschränkungen im Inneren der Gasturbine, insbesondere im Bereich des Verdichters, eine besondere Rolle zukommt.

Es ist Aufgabe der Erfindung, in einer Gasturbine das Arbeitsgas auf möglichst einfache Weise einem Wärmetauscher zuzuführen.

Die Aufgabe wird erfindungsgemäß gelöst durch eine Gasturbine, umfassend einen Verdichter, ein Mittelgehäuse, wenigstens eine Brennkammer, eine Expansionsturbine, und einen Wärmetauscher, wobei die oder jede Brennkammer mit der Expansionsturbine strömungstechnisch über ein Innengehäuse verbunden ist, welches durch den Innenraum des Mittelgehäuses geführt ist, wobei der Verdichter gegen den Innenraum des Mittelgehäuses strömungstechnisch durch eine ringförmige Sammelkammer abgegrenzt wird, welche mit einem Auslass des Verdichters verbunden ist, und welche eine Anzahl von Ableitungen aufweist, die im Betrieb mit der Kaltseite des Wärmetauschers verbunden sind.

Unter der Kaltseite des Wärmetauschers ist hierbei die Gesamtheit der Zuleitungen zum Bereich, in welchem im Wärmetauscher die Wärmeübertragung zwischen dem diesen durchströmenden Arbeitsgas und der Wärmezufuhr stattfindet, zu verstehen. Insbesondere kann hierbei dem Wärmetauscher Wärme durch die Abwärme der Gasturbine zugeführt werden, und insbesondere kann das im Wärmetauscher erwärmte Arbeitsgas dabei dem oder jedem Brenner der Brennkammer zur Sauerstoffversorgung zugeführt werden. Unter dem Verdichter ist hierbei die Gesamtheit aller einzelnen, in sich abgeschlossenen Einheiten zu verstehen, welche innerhalb der Gasturbine den technischen Zweck der Verdichtung des Arbeitsgases erfüllen und strömungstechnisch dem oder jedem Brenner vorgelagert sind.

Der Erfindung liegen hierbei folgende Überlegungen zugrunde:

Die Konzeption einer Gasturbine erfordert komplexe strömungsund werkstofftechnische sowie thermodynamische Modellierungen und numerische Berechnungen, welche zu einem Großteil durch Praxistests an Prototypen verifiziert werden müssen. Jede Modifikation an einem bestehenden Gasturbinen-System erfordert somit auch eine Anpassung der besagten Modellierungen und Berechnungen. Es ist somit von erheblichem Vorteil, einen Mechanismus zur Entnahme des vorverdichteten Arbeitsgases und zu dessen Weiterleitung zu einem Wärmetauscher a priori so zu gestalten, dass er unter möglichst geringen baulichen Veränderungen in ein bestehendes Konzept einer Gasturbine integriert werden kann. Überdies wird hierdurch auch die Möglichkeit eröffnet, eine bereits in Betrieb genommene Gasturbine, bei welcher kein Wärmetauscher vorgesehen ist, unter vergleichsweise geringem Aufwand nachzurüsten.

Unter der Vorgabe möglichst geringer Modifikationen erscheint es somit zunächst naheliegend, die oder jede Ableitung zur Entnahme des Arbeitsgases direkt am Auslass des Verdichters anzuordnen. Eine wichtige Erkenntnis der Erfindung ist nun jedoch, dass dieses Vorgehen strömungstechnisch unvorteilhaft sein könnte, da hierdurch am Auslass des Verdichters über dessen Querschnittsfläche in Richtung der jeweiligen Ableitung ein Druckgradient entstehen könnte. Dies könnte zu einer turbulenten Strömung und zu einer sehr inhomogenen Druckverteilung im Verdichter führen, was die Effizienz des Verdichtungsprozesses, also die Verdichtungsleistung je eingesetzter Energieeinheit, erheblich verringern würde.

Demgegenüber schlägt die Erfindung vor, trotz des zwischen dem Verdichter und dem Innengehäuse beschränkten Raumes im Mittelgehäuse am Auslass des Verdichters eine Sammelkammer vorzusehen, von welcher die oder jede Ableitung zum Wärmetauscher geführt ist. In dieser Sammelkammer ist nun eine günstige Druckverteilung möglich, ohne dass dadurch erhebliche konstruktive Veränderungen an der Gasturbine notwendig werden. Der neu entstehende Aufwand hinsichtlich der Konzeption beschränkt sich hierbei auf die Strömungsführung des Arbeitsgases am Auslass des Verdichters, in der Sammelkammer selbst und in der jeweiligen Ableitung.

Bevorzugt ist die Sammelkammer im Innenraum des Mittelgehäuses angeordnet, und die oder jede Ableitung durch das Mittelgehäuse geführt. Insbesondere ist hierbei die Sammelkammer vorzugsweise vollständig im Innenraum des Mittelgehäuses angeordnet, d.h., die Sammelkammer weist abseits von vereinzelten Haltevorrichtungen keine gemeinsamen Randflächen mit dem Mittelgehäuse auf. Eine derartige Anordnung ermöglicht eine besonders einfache Konstruktion, da somit nur die Sammelkammer mit der oder jeder Ableitung sowie die entsprechenden Haltevorrichtungen konzipiert werden müssen. Die Sammelkammer kann dabei den Dimensionen des Auslasses des Verdichters angepasst werden.

Zweckmäßigerweise ist der Auslass des Verdichters als ein ringförmiger Austrittsdiffusor ausgebildet. Dies ist eine besonders häufig gewählte konstruktive Variante in Gasturbinen, da über den Diffusor durch die dortige Verlangsamung der Strömungsgeschwindigkeit des Arbeitsgases für dieses noch ein weiterer Druckanstieg erzielt werden kann. Ein ringförmiger Diffusor sorgt zudem für eine möglichst homogene Druckverteilung und einen gleichmäßigen Massestrom des Arbeitsgases aus dem Verdichter in die Sammelkammer.

Für eine besonders homogene Druckverteilung in des Sammelkammer und einen besonders gleichmäßigen Massestrom des Arbeitsgases aus der Sammelkammer in die oder jede Ableitung kann insbesondere eine Mehrzahl an Ableitungen drehsymmetrisch von der Sammelkammer wegführen, bzw. eine Mehrzahl von Gruppen von Ableitungen jeweils drehsymmetrisch von der Sammelkammer wegführen.

Als vorteilhaft erweist es sich, wenn die oder jede Brennkammer als eine Silobrennkammer ausgebildet ist. In diesem Fall kann die Sammelkammer zwischen dem Innengehäuse, welches von der oder jeder Brennkammer zur Expansionsturbine führt, und dem Verdichter angeordnet werden, was konstruktiv besonders günstig ist, da nur die Sammelkammer selbst gegenüber einem bereits existierenden Konzept ausgestaltet werden muss.

Günstigerweise weist hierbei die oder jede Silobrennkammer eine einen Brennraum begrenzende innere Wandung und eine äußere Wandung auf, wobei die äußere Wandung die innere Wandung unter Ausbildung eines Hohlraumes umgibt, wobei die innere Wandung in das Innengehäuse übergeht, und wobei der Hohlraum in den Innenraum des Mittelgehäuses übergeht. Im Brennraum einer Silobrennkammer können im Betrieb der Gasturbine Temperaturen von bis zu 1400°C auftreten, was zu besonderen Belastbarkeitsanforderungen an das Material der inneren Wandung führt. Durch die doppelwandige Ausgestaltung der Brennkammer kann der Hohlraum mit einem Gas zur besseren Kühlung der inneren Wandung durchströmt werden, wodurch sich die besagten Belastbarkeitsanforderungen verringern und entsprechend Kosten reduziert werden können.

Als weiter vorteilhaft erweist es sich, wenn von der oder jeder Ableitung über einen Bypass eine direkte strömungstechnische Verbindung zum Innenraum des Mittelgehäuses herstellbar ist. Hierdurch kann über den Bypass ein Teil des vorverdichteten Arbeitsgases in den Innenraum des Mittelgehäuses geleitet werden, wo das Arbeitsgas das Innengehäuse umströmen kann. Da im Betrieb durch das Innengehäuse das in der Brennkammer verbrannte Brennstoff-Arbeitsgas-Gemisch zur Expansionsturbine hin geführt wird, können am Innengehäuse hohe Temperaturen entstehen, was zu besonderen Belastbarkeitsanforderungen an das Material des Innengehäuses führen kann. Dadurch, dass das Innengehäuse von einem Teil des vorverdichteten Arbeitsgases umströmt wird, kann ein kühlender Effekt erzielt werden, was die besagten Anforderungen verringert.

Überdies ermöglicht ein Bypass von der Ableitung zum Innenraum des Mittelgehäuses, den Innenraum des Mittelgehäuses unter ähnlichem Druck zu halten wie den Brennraum der Brennkammer und den darin übergehenden Innenraum des Innengehäuses. Eine geringe Druckdifferenz zwischen den genannten Räumen vereinfacht die bauliche Ausgestaltung des Innengehäuses.

Zweckmäßigerweise weist hierbei der Bypass eine Anzahl von Ventilen und eine Anzahl von jeweils mit einem Ventil verbundenen Rohrleitungen auf, wobei die Verbindung von der oder jeder Ableitung zum Innenraum des Mittelgehäuses über je ein Ventil und eine Rohrleitung führt. Über ein oder mehrere Ventile lässt sich der Massestrom des vorverdichteten Arbeitsgases aus dem Verdichter in den Innenraum des Mittelgehäuses und somit die Kühlwirkung insbesondere am Innengehäuse besonders einfach regeln.

Günstigerweise ist dabei das oder jedes Ventil innerhalb des Mittelgehäuses an der jeweiligen Ableitung angeordnet. Somit muss die entsprechende Rohrleitung nicht durch das Mittelgehäuse aus der Gasturbine herausgeführt werden, was die notwendigen konstruktiven Änderungen gegenüber einem bereits existierenden Konzept gering hält.

Alternativ dazu kann das oder jedes Ventil jedoch auch außerhalb der Gasturbine an der jeweiligen Ableitung angeordnet sein. Dies kann von Vorteil sein, wenn eine besonders einfache Erreichbarkeit des oder jedes Ventils im Betrieb gewünscht ist, beispielsweise, wenn die Gasturbine nicht im Dauereinsatz betrieben werden soll, sondern häufig angefahren und nach einer gewissen Betriebsdauer wieder heruntergefahren werden soll, wodurch sich möglicherweise ein besonderer strömungstechnischer Regelbedarf ergeben kann.

Die innere Wandung der oder jeder Silobrennkammer weist günstigerweise eine Vielzahl an Bohrungen auf. Durch derartige Bohrungen kann vorverdichtetes Arbeitsgas aus dem Hohlraum infolge der Druckdifferenz in geringen Mengen in den Brennraum strömen, wo es zur Kühlung des Materials der inneren Wandung beiträgt. Dies reduziert weiter die Temperatur, für die die Werkstoffe, welche für die innere Wandung verwendet werden, ausgelegt werden sollten.

Vorteilhafterweise weist das Innengehäuse eine Vielzahl an Bohrungen auf. Durch derartige Bohrungen kann vorverdichtetes Arbeitsgas aus dem Innenraum des Mittelgehäuses infolge der Druckdifferenz in geringen Mengen in den mit dem Brennraum verbundenen Innenraum des Innengehäuses strömen, wo es zur Kühlung des Materials des Innengehäuses beiträgt. Dies reduziert weiter die Temperatur, für die die Werkstoffe, welche für das Innengehäuses verwendet werden, ausgelegt werden sollten.

Die Erfindung nennt weiter ein Wärmekraftwerk mit einer vorbeschriebenen Gasturbine. Die Vorteile der Gasturbine und ihrer Weiterbildungen können hierbei sinngemäß auf das Wärmekraftwerk übertragen werden.

Nachfolgend wird ein Ausführungsbeispiel der Erfindung anhand einer Zeichnung näher erläutert. Hierbei zeigen jeweils schematisch:
- FIG 1: in einer Axialschnittdarstellung einen Ausschnitt einer Gasturbine mit einer Sammelkammer am Auslass des Verdichters,
- FIG 2: in einer Querschnittdarstellung eine Gasturbine mit einer Sammelkammer und einer Silobrennkammer, und
- FIG 3: ein Wärmekraftwerk mit einer Gasturbine, welche einen Wärmetauscher aufweist.

Einander entsprechende Teile und Größen sind in allen Figuren jeweils mit gleichen Bezugszeichen versehen.

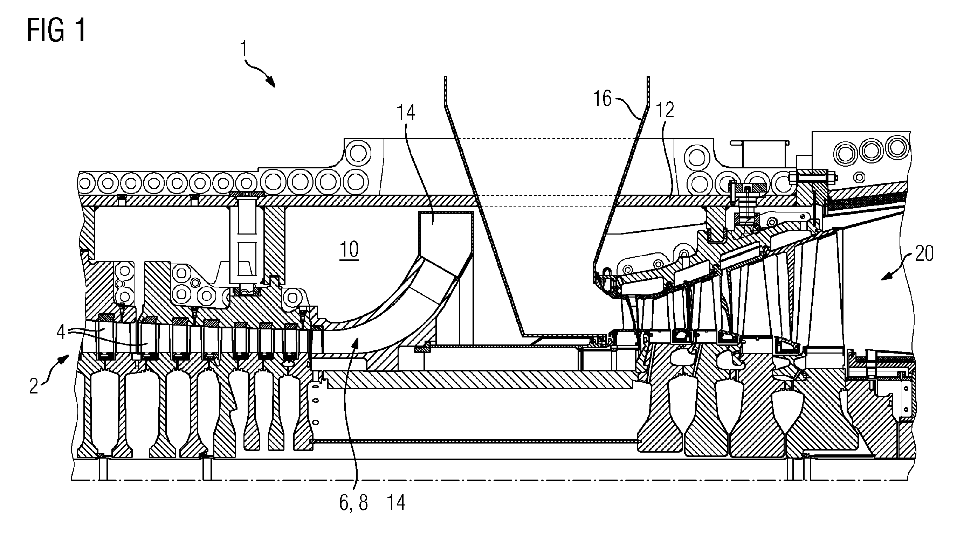

In FIG 1 ist in einer Axialschnittdarstellung ein Ausschnitt einer Gasturbine 1 dargestellt. Die Gasturbine 1 weist einen Verdichter 2 mit Verdichterkammern 4 auf, welche zu einem als Austrittsdiffusor 6 ausgebildeten Auslass 8 führen. Der Austrittsdiffusor 6 ragt dabei in den Innenraum 10 des Mittelgehäuses 12. Über den Austrittsdiffusor 6 ist mit dem Verdichter 2 eine Sammelkammer 14 verbunden, welche im Innenraum 10 des Mittelgehäuses 12 angeordnet ist. Von der Sammelkammer 14 sind in nicht näher dargestellter Weise Ableitungen zu einem Wärmetauscher geführt.

Auf der dem Verdichter 2 gegenüberliegenden Seite der Sammelkammer 14 ist durch das Mittelgehäuse 12 ein Innengehäuse 16 geführt, welches den Brennraum einer nicht dargestellten Silobrennkammer mit der Expansionsturbine 20 verbindet. Im Betrieb der Gasturbine 1 wird im Verdichter 2 Luft als Arbeitsgas verdichtet. Diese strömt über den Austrittsdiffusor 6 in die Sammelkammer 14 und wird über in der Zeichnung nicht dargestellte Ableitungen zu einem Wärmetauscher geführt, wobei ein Teil der Luft in den Innenraum 10 des Mittelgehäuses 12 zurückgeleitet wird. Hier kann die vorverdichtete Luft zur Kühlung des Innengehäuses 16 beitragen, durch welches vom Brennraum ein verbranntes Brennstoff-Luft-Gemisch zur Expansionsturbine 20 strömt, wodurch am Innengehäuse erhöhte Temperaturen entstehen. Durch die Kühlwirkung der teilweise in den Innenraum des Innengehäuses zurückgeleiteten Luft kann das Material des Innengehäuses für niedrigere Maximaltemperaturen ausgelegt werden.

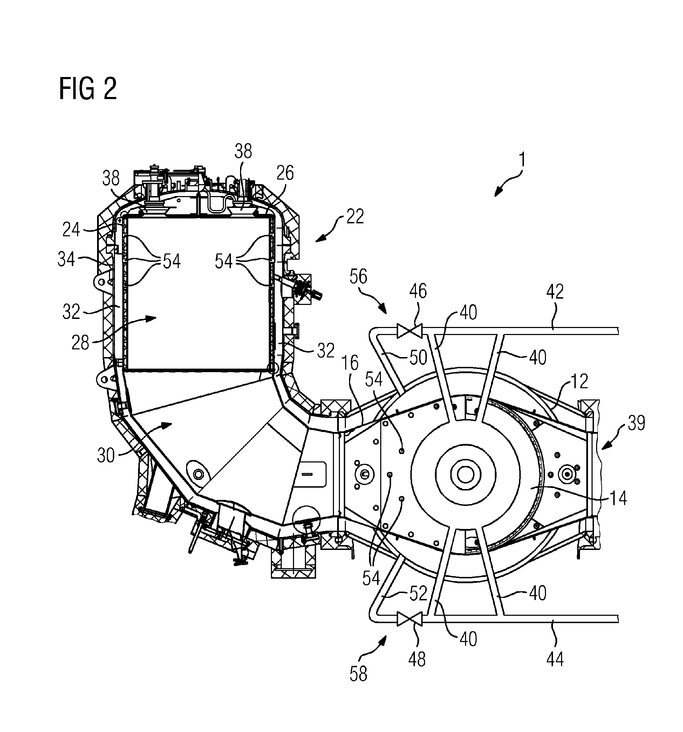

In FIG 2 ist in einer Querschnittdarstellung eine Gasturbine 1 mit einer Sammelkammer 14 und einer Silobrennkammer 22 gezeigt. Die Ansicht ist dabei vom Verdichter in Richtung der Expansionsturbine genommen. Die Silobrennkammer 22 umfasst eine innere Wandung 24, welche zusammen mit dem Flammrohrboden 26 den Brennraum 28 des Flammrohres 30 begrenzt. Die innere Wandung 24 und der Flammrohrboden 26 werden unter Ausbildung eines Hohlraumes 32 von einer äußeren Wandung 34 umgeben. Durch Öffnungen 36 im Flammrohrboden 26 münden Brenner 38 in den Brennraum 28.

Die innere Wandung 24 geht an ihrem achsnahen Ende in das Innengehäuse 16 über, so dass der Brennraum 28 strömungstechnisch mit dem Innenraum des Innengehäuses 16 verbunden ist. Die äußere Wandung 34 geht in das Mittelgehäuse 12 über, so dass der Hohlraum 32 direkt mit dem Innenraum 10 des Mittelgehäuses 12 verbunden ist. Am gegenüberliegenden Ende 39 geht das Innengehäuse 16 in die innere Wandung einer weiteren, hier nicht näher dargestellten Silobrennkammer über, welche im Wesentlichen baugleich und symmetrisch zur Silobrennkammer 22 ist.

Vor dem Innengehäuse 16 ist die Sammelkammer 14 angeordnet, welche mit dem hier nicht dargestellten Austrittsdiffusor des Verdichters verbunden ist. Von der Sammelkammer 14 führen insgesamt vier Ableitungen 40 durch das Mittelgehäuse von der Sammelkammer 14 weg, wobei zwei der Ableitungen 40 dabei des Mittelgehäuses mit einem Leitungssystem 42, zwei der Ableitungen 40 unterhalb des Mittelgehäuses mit einem Leitungssystem 44 verbunden sind. Die Leitungssysteme 42 und 44 führen zur Kaltseite eines nicht näher dargestellten Wärmetauschers. Von den Leitungssystemen 42, 44 führt jeweils über ein Ventil 46, 48 eine Rohrleitung 50, 52 durch das Mittelgehäuse 12 zurück in den Innenraum des Mittelgehäuses 12. Das Innengehäuse 16 weist ebenso wie die innere Wandung 24 eine Vielzahl an Bohrungen 54 auf.

Im Betrieb der Gasturbine 1 wird durch die Sammelkammer 14 die vom Verdichter vorverdichtete Luft entnommen und über die Ableitungen 40 in Richtung der Kaltseite des Wärmetauschers geleitet. Die Ventile 46, 48 und die Rohrleitungen 50, 52 bilden hierbei jeweils einen Bypass 56, 58, über welchen unter Kontrolle des Massestroms ein Teil der Luft zurück in den Innenraum 10 des Mittelgehäuses 12 und damit auch in den Hohlraum 32 zwischen der inneren Wandung 24 und der äußeren Wandung 34 strömen kann. Hierdurch kann die vorverdichtete Luft zur Kühlung des Innengehäuses 16 und der inneren Wandung 24 beitragen, welche vom im Brennraum 28 verbrannten Brennstoff-Luft-Gemisch überströmt werden. Die Bohrungen 54 führen hierbei dazu, dass die verdichtete Luft, welche über die Bypässe 56, 58 zurückgeleitet wird, ins Innere des Flammrohres 30 bzw. des Innengehäuses 16 strömen kann, was weiter die Kühlwirkung verbessert. Durch den über die Ventile 46, 48 kontrollierbaren Massestrom der zur Kühlung verwendeten Luft kann hierbei ein thermodynamisch möglichst effizienter Arbeitspunkt eingestellt werden.

Von der Warmseite des Wärmetauschers ist die Luft zur Sauerstoffversorgung der Brenner 38 in einer Weise zurückzuführen, welche hier nicht Gegenstand der Erfindung ist.

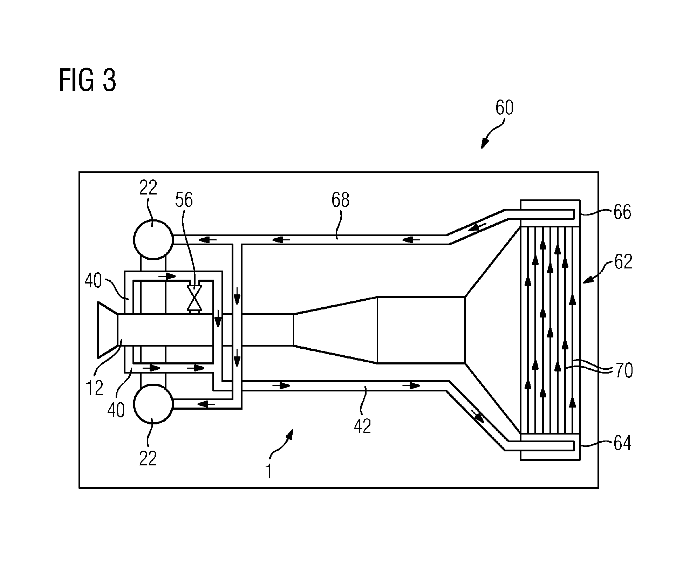

In FIG 3 ist schematisch ein Wärmekraftwerk 60 mit einer Gasturbine 1 dargestellt, welche einen Wärmetauscher 62 aufweist. Aus dem Mittelgehäuse 12 führen von der in der Zeichnung nicht dargestellten Sammelkammer Ableitungen 40 zu einem Leitungssystem 42, welches einen Bypass 56 aufweist, der wieder zurück durch das Mittelgehäuse 12 führt. Das Leitungssystem 42 ist mit der Kaltseite 64 des Wärmetauschers 62 verbunden. Von der Warmseite 66 des Wärmetauschers führt eine Leitung 68 in Richtung der beiden Silobrennkammern 22.

Die in der Sammelkammer entnommene Luft wird durch die Ableitungen 40 zum Leitungssystem 42 geführt. Ein Teil der Luft wird dabei über den Bypass 56 zur Kühlung wieder zurück in den Innenraum des Mittelgehäuses 12 geleitet. Die restliche Luft wird durch das Leitungssystem 42 zum Wärmetauscher 62 geleitet und dort in feinen Rohren 70, welche von der Abwärme der Silobrennkammern 22 umströmt werden, erwärmt. Die so erwärmte Luft wird nun über die Leitung 68 zu den Silobrennkammern 22 geführt und dort in einer Weise, welche nicht Gegenstand der Erfindung ist, der Sauerstoffversorgung der jeweiligen Brenner zugeführt.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Gasturbine (1), umfassend einen Verdichter (2), ein Mittelgehäuse (12), wenigstens eine Brennkammer (22), eine Expansionsturbine (20), und einen Wärmetauscher,
wobei die oder jede Brennkammer (22) mit der Expansionsturbine (20) strömungstechnisch über ein Innengehäuse (16) verbunden ist, welches durch den Innenraum (10) des Mittelgehäuses (12) geführt ist,
wobei der Verdichter (2) gegen den Innenraum (10) des Mittelgehäuses (12) strömungstechnisch durch eine ringförmige Sammelkammer (14) abgegrenzt wird, welche mit einem Auslass (8) des Verdichters (2) verbunden ist, und welche eine Anzahl von Ableitungen (40) aufweist, die im Betrieb mit der Kaltseite (64) des Wärmetauschers (62) verbunden sind.

2. Gasturbine (1) nach Anspruch 1,
wobei die Sammelkammer (14) im Innenraum (10) des Mittelgehäuses (12) angeordnet ist, und die oder jede Ableitung (20) durch das Mittelgehäuse (12) geführt ist.

3. Gasturbine (1) nach Anspruch 1 oder Anspruch 2,
wobei der Auslass (8) des Verdichters (2) als ein ringförmiger Austrittsdiffusor (6) ausgebildet ist.

4. Gasturbine (1) nach einem der vorhergehenden Ansprüche,
wobei die oder jede Brennkammer (22) als eine Silobrennkammer ausgebildet ist.

5. Gasturbine (1) nach Anspruch 4,
wobei die oder jede Silobrennkammer (22) eine einen Brennraum (28) begrenzende innere Wandung (24) und eine äußere Wandung (34) aufweist, wobei die äußere Wandung (34) die innere Wandung (24) unter Ausbildung eines Hohlraumes (32) umgibt, wobei die innere Wandung (24) in das Innengehäuse (16) übergeht, und wobei der Hohlraum (32) in den Innenraum (10) des Mittelgehäuses (12) übergeht.

6. Gasturbine (1) nach einem der vorhergehenden Ansprüche,
wobei von der oder jeder Ableitung (40) über einen Bypass (56, 58) eine direkte strömungstechnische Verbindung zum Innenraum (10) des Mittelgehäuses (12) herstellbar ist.

7. Gasturbine (1) nach Anspruch 6,
wobei der Bypass (56, 58) eine Anzahl von Ventilen (46, 48) und eine Anzahl von jeweils mit einem Ventil (46, 48) verbundenen Rohrleitungen (50, 52) aufweist, und wobei die Verbindung von der oder jeder Ableitung (40) zum Innenraum (10) des Mittelgehäuses (12) über je ein Ventil (46, 48) und eine Rohrleitung (50, 52) führt.

8. Gasturbine (1) nach Anspruch 7,
wobei das oder jedes Ventil (46, 48) innerhalb des Mittelgehäuses (12) an der jeweiligen Ableitung (40) angeordnet ist.

9. Gasturbine (1) nach Anspruch 7,
wobei das oder jedes Ventil (46, 48) außerhalb der Gasturbine (1) an der jeweiligen Ableitung (40) angeordnet ist.

10. Gasturbine (1) nach einem der Ansprüche 5 bis 9,
wobei die innere Wandung (24) der oder jeder Silobrennkammer (22) eine Vielzahl an Bohrungen (54) aufweist.

11. Gasturbine (1) nach einem der vorhergehenden Ansprüche,
wobei das Innengehäuse (16) eine Vielzahl an Bohrungen (54) aufweist.

12. Wärmekraftwerk (60) mit einer Gasturbine (1) nach einem der vorhergehenden Ansprüche.
